# EUROPÄISCHE PATENTSCHRIFT

(11) **EP 1 068 991 B1**
(45) Veröffentlichungstag und Bekanntmachung des Hinweises auf die Patenterteilung: **21.05.2008**
(21) Anmeldenummer: 00111845.4
(22) Anmeldetag: 07.06.2000
(51) Int. Cl.: B60Q 1/42, B62D 15/02

(54) **Lenkstockmodul mit Lenkwinkelsensor und Blinkerrückstellung**
Steering column assembly with steering angle sensor and turn signal cancellation
Ensemble colonne de direction avec capteur d'angle de braquage et annulation de signal clignotant

(30) Priorität: 15.07.1999 DE 19933047
(43) Veröffentlichungstag der Anmeldung: 17.01.2001
(73) Patentinhaber: Valeo Schalter und Sensoren GmbH, 74321 Bietigheim-Bissingen (DE)
(72) Erfinder: Ruetz, Christian, 71636 Ludwigsburg (DE)
(74) Vertreter: Dreiss, Fuhlendorf, Steimle & Becker

(56) Entgegenhaltungen:
- EP-A- 0 853 022
- DE-A- 19 525 138
- DE-A- 19 602 060
- DE-C- 4 427 883
- US-A- 5 218 769

## Beschreibung

Die Erfindung betrifft ein Lenkstockmodul für Kraftfahrzeuge mit einem ersten Lenkstockschalter zur Blinkerbetätigung, wobei der erste Lenkstockschalter eine Blinkerrückstellung aufweist, und mit einem Lenkwinkelsensor.

Bekannt ist ein Lenkstockmodul mit Lenkstockschalter bei dem die Blinkerrückstellung durch einen auf der Lenksäule des Kraftfahrzeugs angeordneten Stift erfolgt.

Nachteilig an dieser Anordnung ist, dass der auf der sicherheitsrelevanten Lenksäule ein Bauteil angebracht werden muss, was sich nachteilig auf deren Funktion auswirken kann. Außerdem ist die Funktion der Blinkerrückstellung nur gewährleistet, wenn der Stift auf der Lenksäule und der Rückstellnocken des Lenkstockschalters relativ zueinander eine genau definierte Position einnehmen. Dazu muß das Lenkstockmodul im Kraftfahrzeug montiert sein. Eine Funktionskontrolle des Lenkstockmoduls vor der Montage in das Kraftfahrzeug ist somit nicht möglich.

Bekannt ist zum Beispiel aus der gattungsgemäßen DE 196 02 060 A1 ein Lenkstockmodul, bei dem der Stift zur Blinkerrückstellung am Rotor der Signalübertragungskassette angeordnet ist. Nachteilig an dieser Ausführung ist, dass der Stift einen großen Abstand zwischen dem Rotor der Signalübertragungskassette und dem Rückstellnocken des Lenkstockschalters überbrücken muß. Dadurch ist die mechanische Beanspruchung des Stiftes groß.

Aus der DE 195 25 138 A1 ist ein Lenkstockmodul bekannt bei dem eine Rückstellscheibe vorgesehen ist, die der Blinkerrückstellung dient. Diese Rückstellscheibe 34 ist in eigebautem Zustand des Lenkstockmodzuls zwischen Lenkrad und Lenksäule fixiert. Dadurch können bei diesem Lenkstockmodul nicht alle Funktionen außerhalb des Fahrzeugs überprüft werden. Entsprechendes gilt für das aus der DE 44 27 884 C1 bekannte Lenkstockmodul.

Der Erfindung liegt daher die Aufgabe zugrunde, ein Lenkstockmodul bereitzustellen, bei dem die Blinkerrückstellung einfach aufgebaut ist und sehr zuverlässig funktioniert. Außerdem soll das Lenkstockmodul auch außerhalb eines Kraftfahrzeugs funtkionstüchtig und prüfbar sein.

Diese Aufgabe wird erfindungsgemäß gelöst durch ein Lenkstockmodul für Kraftfahrzeuge mit einem ersten Lenkstockschalter zur Blinkerbetätigung, wobei der erste Lenkstockschalter eine Blinkerrückstellung aufweist, und mit einem Lenkwinkelsensor, wobei die Blinkerrückstellung von dem Lenkwinkelsensor steuerbar ist. Dadurch wird gewährleistet, dass die Blinkerrückstellung unabhängig von der Position des Lenkstockmoduls funktionsfähig ist. Außerdem kann das komplette Lenkstockmodul außerhalb der Kraftfahrzeugs montiert und auf seine Funktionstüchtigkeit geprüft werden. Außerdem verringert sich der Platzbedarf und die Montage des Lenkstockmoduls im Kraftfahrzeug wird vereinfacht.

Bei einer Ausführungsform der Erfindung ist vorgesehen, dass der Lenkwinkelsensor eine drehbare Codescheibe aufweist, und dass die Codescheibe einen in axialer Richtung über die : Codescheibe hinausragenden Vorsprung bzw. einen Stift aufweist, durch den ein Rückstellnocken des Lenkstockschalters steuerbar ist. Dadurch wird die Zahl der Bauteile verringert und der Vorsprung kann kurz sein, was zu einer geringen Belastung desselben führt.

Nach einer weiteren Variante ist vorgesehen, dass die Codescheibe radial gesichert und drehbar in einem Träger des Lenkwinkelsensors gelagert ist, so dass Codescheibe und Lenkwinkelsensor als montagefertige Einheit hergestellt werden können und die relative Lage beider Bauteile zueinander keinen Veränderungen unterworfen ist.

Nach einer vorteilhaften Ausgestaltung der Erfindung ist die Codescheibe radial gesichert und drehbar in einem Gehäuse des Lenkwinkelsensors gelagert, so dass die Codescheibe einfach montierbar ist, indem das Gehäuse mit dem Lenkwinkelsensor verbunden wird.

Nach einer weiteren vorteilhaften Ausgestaltung der Erfindung ist auf dem Träger des Lenkwinkelsensors eine Abtasteinrichtung zum Abtasten der Codescheibe angeordnet, so dass die Genauigkeit der relativen Lage von Codescheibe und Abtasteinrichtung weiter verbessert wird.

In Ergänzung der Erfindung ist vorgesehen, dass die Drehwinkelcodierung auf einer Stirnfläche der Codescheibe angeordnet ist, so dass der Lenkwinkelsensor besonders kompakt baut.

Bei einer anderen Variante erfolgt die Drehwinkelcodierung auf der Codescheibe in Form von Löchern. Diese Art der Drehwinkelcodierung ist besonders robust, einfach herzustellen und unempfindlich gegen äußere Einflüsse wie beispielsweise Verschmutzungen.

Eine andere Variante sieht vor, dass die Drehwinkelcodierung auf einer Mantelfläche der Codescheibe angeordnet ist, so dass die Abtastvorrichtung im wesentlichen außerhalb der Codescheibe angeordnet werden kann.

In weiterer Ausgestaltung der Erfindung ist vorgesehen, dass an dem Lenkstockmodul mindestens ein Lenkstockschalter vorhanden ist, so dass das Lenkstockmodul weitere Funktionen übernehmen kann.

Bei einer weiteren Ausführungsform ist vorgesehen, dass die Signalübertragungskassette, der Lenkwinkelsensor und/oder zweiter und dritter Lenkstockschalter mit einem ersten Lenkstockschalter zu einem Lenkstockmodul verbindbar sind, so dass ein einfacher Aufbau und eine kostengünstige Montage des Lenkstockmoduls erreicht werden.

Eine Variante sieht vor, dass eine erste Auswerteelektronik des Lenkwinkelsensors und eine zweite Auswerteelektronik der Signalübertragungskassette und/oder des oder der Lenkstockschalter räumlich benachbart angeordnet sind, so dass der Platzbedarf für die erste und zweite Auswerteelektronik verringert wird. Dies gilt besonders für den vom Lenkrad abgewandten Teil des Lenkstockmoduls.

Bei einer anderen Ausführungsform ist vorgesehen, dass eine Signalübertragungskassette vorhanden ist, wobei die Signalübertragungskassette einen mit einem Lenkrad des Kraftfahrzeugs drehbaren Teil aufweist, und dass die Codescheibe und der drehbare Teil der Signalübertragungskassette drehfest mit der Codescheibe verbunden ist, so dass die Lenkbewegung nur einmal von der Lenksäule oder dem Lenkrad auf das Lenkstockmodul übertragen werden muß.

Weitere Vorteile und vorteilhafte Ausgestaltungen der Erfindung sind der nachfolgenden Beschreibung, der Zeichnung und den Ansprüchen entnehmbar.

Ein Ausführungsbeispiel des Gegenstands der Erfindung ist in der Zeichnung dargestellt und im folgenden näher beschrieben.

Es zeigen:
- Fig. 1:: ein erfindungsgemäßes Lenkstockmodul in Explosionsdarstellung;
- Fig. 2:: eine Ausführungsform eines erfindungsgemäßen Lenkwinkelsensors in Explosionsdarstellung;
- Fig. 3:: eine weitere Ausführungsform eines erfindungsgemäßen Lenkwinkelsensors in Explosionsdarstellung;
- Fig. 4:: das Zusammenwirken von Lenkwinkelsensor; Signalübertragungskassette in Explosionsdarstellung und
- Fig. 5:: das Zusammenwirken von Lenkwinkelsensor und Lenkwinkelsensor in Explosionsdarstellung.

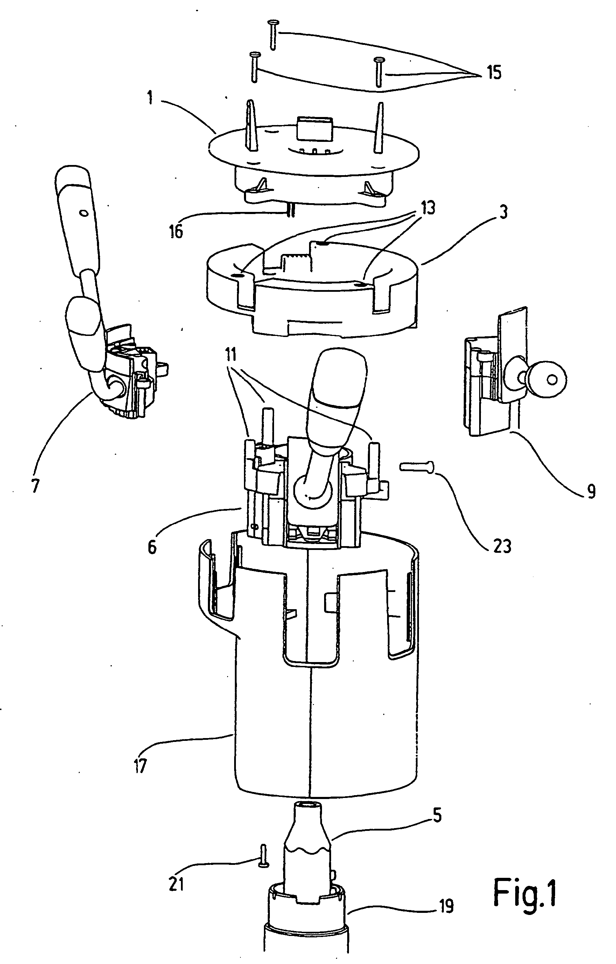

In Fig. 1 ist ein erfindungsgemäßes Lenkstockmodul in Explosionsdarstellung gezeigt. Eine Signalübertragungskassette 1 dient der Übertragung elektrischer Signale von einem nicht dargestellten Lenkrad zum Lenkstockmodul und von dort in das Bordnetz des Kraftfahrzeugs. Die Signalübertragungskassette 1 weist unter anderem ein relativ zum Lenkstockmodul feststehendes Teil und ein sich mit dem Lenkrad drehendes Teil auf. In der Signalübertragungskassette 1 befindet sich ein nicht dargestelltes Breitbandkabel, welches beipsielsweise als Wickelfeder ausgestaltet ist. Über dieses Breitbandkabel werden Informationen, bzw. elektrische Ströme vom Lenkrad zum Kraftfahrzeug und umgekehrt übertragen. Bei modernen Kraftfahrzeugen können u. a. Hupe, Airbag und die Wahl einer Schaltstufe vom Lenkrad aus betätigt werden.

Unterhalb der Signalübertragungskassette 1 ist ein Lenkwinkelsensor 3 dargestellt. Der Lenkwinkelsensor 3 ermittelt beispielsweise durch optische Abtastung einer nicht dargestellten Codescheibe den Lenkwinkel einer Lenksäule 5 und damit auch die Stellung der gelenkten Räder. Die Lenkwinkeldaten können mittels einer nicht dargestellten ersten Auswerteelektronik in Low- oder High-Speed-CAN-Bus-Daten kodiert und dem Kraftfahrzeug gesendet werden. Dort können sie beispielsweise als Eingangsgröße für ein Fahrstabilitätsprogramm verwandt werden.

Ein erster Lenkstockschalter 6 dient beispielsweise zur Betätigung der Fahrtrichtungsanzeige, des Lichts und der Wischeranlage. Darüber hinaus ist der erste Lenkstockschalter 6 Träger des Lenkstockmoduls; d. h. mit ihm sind die übrigen Komponenten des Lenkstockmoduls verbunden. Dies geschieht, indem ein zweiter Lenkstockschalter 7 und ein dritter Lenkstockschalter 9 über als zylindrische Stifte ausgeführte Führungen 11 von oben aufgesteckt werden. Anschließend wird der Lenkwinkelsensor 3 auf die Führungen 11 aufgeschoben. Zu diesem Zweck weist der Lenkwinkelsensor 3 Bohrungen 13 auf, die bezüglich Durchmesser und Abstand den Führungen 11 entsprechen. Schließlich wird die Signalübertragungskassette 1 aufgesteckt und das Lenkstockmodul fixiert, indem drei Schrauben 15 in nicht dargestellte Gewinde in den Führungen 11 gedreht werden. Die drei Schrauben 15 gehen durch entsprechende Bohrungen in der Signalübertragungskassette 1 und dem Lenkwinkelsensor 3.

Eine Verkleidung 17 schützt das Lenkstockmodul vor äußeren Einflüssen wie beispielsweise Staub und gibt dem Lenkstockmodul ein ansprechendes Äußeres. Darüberhinaus verkleidet es auch die Lenksäule 5 und ein Mantelrohr 19. Die Verkleidung 17 wird von unten auf das Lenkstockmodul gesteckt und mit einer oder mehreren Schrauben 21 mit dem Lenkstockmodul verschraubt. Die Lenksäule 5 ist in dem Mantelrohr 19 gelagert. D. h., dass mit zunehmendem Abstand der Lenksäule 5 vom Mantelrohr 19 der Rundlauffehler der Lenksäule und/oder die Exzentrizität der Lenksäule 5 bezüglich des Mantelrohrs 19 zunehmen.

Der zweite und der dritte Lenkstockschalter 7 und 9 können beispielsweise zur Steuerung der Kraftfahrzeuggeschwindigkeit und für Sonderfunktionen genutzt werden.

Durch die Montage des Lenkwinkelsensors 3 auf die Führungen 11 werden automatisch drei nicht dargestellte Stecker vom Lenkwinkelsensor 3 mit dem entsprechenden Stecker des ersten, zweiten und dritten Lenkstockschalters 6, 7 und 9 kontaktiert. Durch die Montage der Signalübertragungskassettte 1 auf die Führungen 11 wird automatisch auch ein nicht dargestellter Stecker der Signalübertragungskassette 1 mit einem entsprechenden Stecker des Lenkwinkelsensors 3 kontaktiert.

Über die Kontaktierungen zwischen dem Lenkwinkelsensor 3 und den Modulkomponenten Signalübertragungskassette 1, erster, zweiter und dritter Lenkstockschalter 6, 7 und 8 empfängt oder sendet eine räumlich zur ersten Auswerteelektronik benachbart angeordnete, nicht dargestellte zweite Auswerteelektronik Signale. Diese Signale werden von der zweiten Auswerteelektronik in Low- oder High-Speed-CAN-Bus-Daten kodiert oder entkodiert und dem Kraftfahrzeug gesendet oder von ihm empfangen. Vorteilhafterweise werden die Signale, welche die erste Auswerteelektronik sendet oder empfängt, und die Signale, welche die zweite Auswerteelektronik sendet oder empfängt, über eine Schnittstelle zwischen Lenkstockmodul und Kraftfahrzeug gesendet oder empfangen.

Außerdem greift ein in axialer Richtung über die Signalübertragungskassette 1 hinausragender und mit den drehbaren Teil der Signalübertragungskassette 1 verbundener Zapfen 16 in die in Fig. 1 nicht dargestellte Codescheibe des Lenkwinkelsensors 3. Der Zapfen 16 ist auch der Rückstellnocken für die Fahrtrichtungsanzeige-Funktion des ersten Lenkstockschalters 6.

Das Lenkstockmodul wird lösbar im Kraftfahrzeug montiert. Dazu wird das Lenkstockmodul von oben auf das Mantelrohr 19 des Kraftfahrzeugs gesteckt und über eine nicht dargestellte, am ersten Lenkstockschalter 6 angeordnete Befestigungsschelle mit einer Schraube 23 am Mantelrohr 19 befestigt.

Durch die Montage des Lenkstockmoduls im Kraftfahrzeug wird automatisch der nicht dargestellte Stecker vom Lenkstockmodul zum ebenfalls nicht dargestellten entsprechenden Stecker des Kraftfahrzeugs kontaktiert. Dieser Stecker stellt die o. g. Schnittstelle zwischen Lenkstockmodul und Kraftfahrzeug dar.

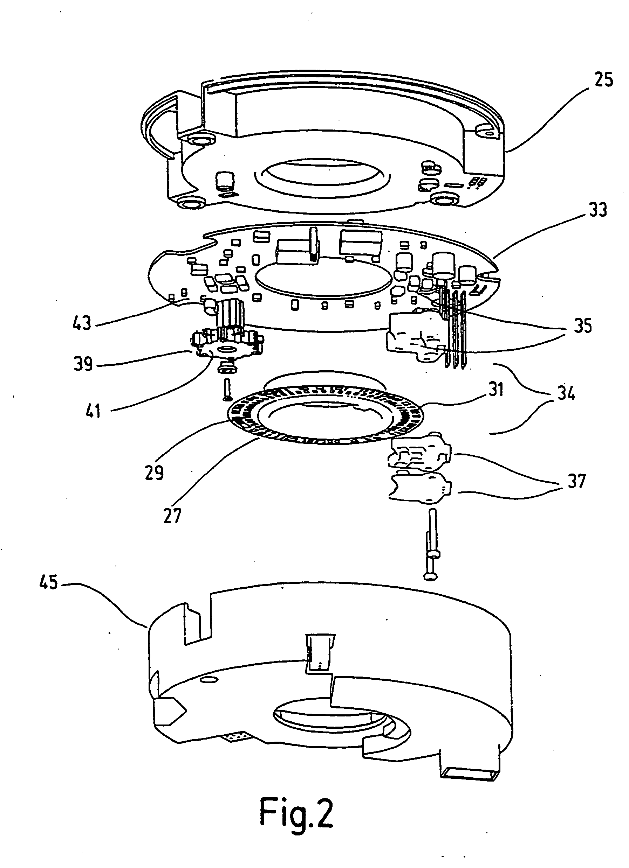

In Fig. 2 ist der Lenkwinkelsensor 3 in einer Explosionsdarstellung abgebildet. Eine drehbar in einem Träger 25 des Lenkwinkelsensors 3 gelagerte Codescheibe 27 weist eine Inkrementalspur 29 und eine Codespur 31 auf. Die Codescheibe 27 ist beispielsweise eine Lochscheibe.

In zusammengebautem Zustand greift der in Fig. 1 dargestellte Zapfen 16 in eine nicht dargestellte Ausnehmung der Codescheibe 27 und überträgt somit die Lenkbewegung des Lenkrads auf die Codescheibe 27. Die Ausnehmung kann ein sich in radialer Richtung erstreckendes Langloch sein, das die Drehbewegung des Zapfens 16 in tangentialer Richtung spielfrei überträgt und das in radialer Richtung Rundlauffehler der Lenksäule 5, der Signalübertragungskassette 1 oder des Lenkrads ausgleicht. Zusätzlich wird die Genauigkeit der Drehwinkelmessung dadurch verbessert, dass die Codescheibe, in Richtung der Längsachse der Lenksäule gesehen, näher an der Lagerung der Lenksäule im Mantelrohr angeordnet ist.

Auf einer Leiterplatte 33 des Lenkwinkelsensors 3 ist eine Abtasteinrichtung 34 dargestellt, die im wesentlichen aus einem Sender 35 mit beispielsweise 4 Leuchtdioden und einem Empfänger 37 mit beispielsweise 4 Transistoren besteht. In zusammengebautem Zustand strahlt der Sender 35 Licht durch die Löcher der Codescheibe 27 zum Empfänger 37. Durch die Anordnung der Löcher in der Inkrementalspur 29 und der Codespur 31 der Codescheibe 27 wird der Lenkwinkel über eine Lenkradumdrehung von 360° bestimmt.

Eine Umdrehungserkennung 39 ermittelt die Zahl der Lenkradumdrehungen. Dabei wird ein mit einem Magnet versehenes Zahnrad 41 einmal pro Umdrehung von der Codescheibe 27 mitgenommen. Unter dem Zahnrad 41 befinden sich 6 Hall-Elemente 43, von denen immer eines geschaltet ist. Mit 6 Hall-Elementen lassen sich somit sechs Lenkradumdrehungen eindeutig bestimmen. Auf der Leiterplatte 33 sind die erste und die zweite Auswerteelektronik andeutungsweise dargestellt. Da die erste und die zweite Auswerteelektronik nicht erkennbar räumlich getrennt dargestellt sind, wurde auf die Vergabe von Bezugszeichen verzichtet.

Mit einem Gehäuse 45 wird der Lenkwinkelsensor 3 vor äußeren Einflüssen geschützt.

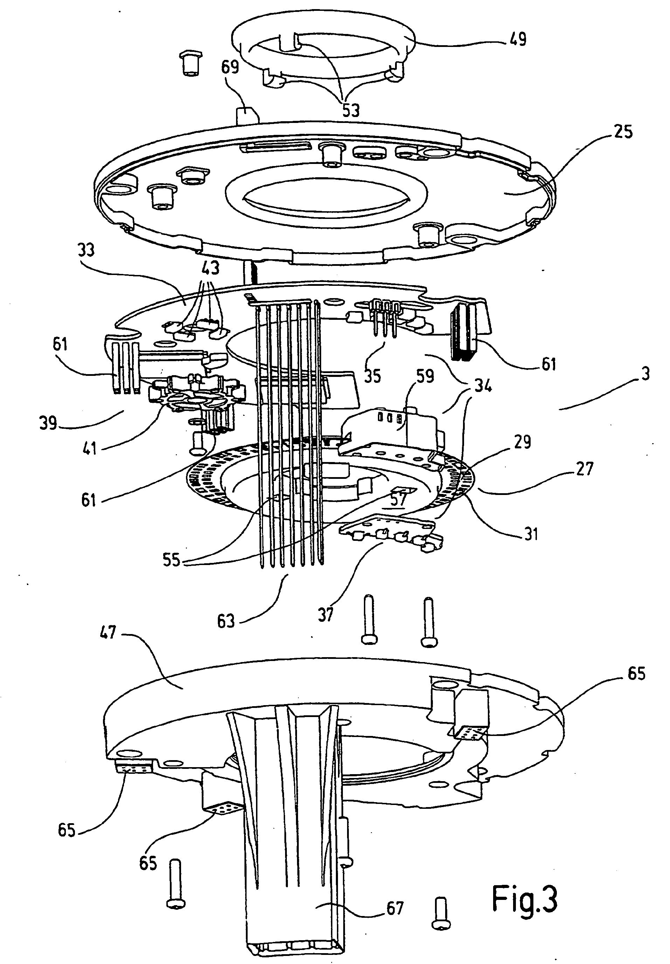

In Fig. 3 ist eine weitere Ausführungsform eines erfindungsgemäßen Lenkwinkelsensors 3 in einer Explosionsdarstellung abgebildet. Bezüglich übereinstimmender Merkmale wird auf die Fig. 1 und 2 sowie deren Beschreibung Bezug genommen.

Die Codescheibe 27 ist drehbar in einem Gehäuse 47 des Lenkwinkelsensors 3 gelagert. Die Lagerung besteht aus einem Lagerring 49 und einer entsprechenden Bohrung 51 in dem Gehäuse 47. Der Lagerring weist drei hakenförmige Vorsprünge 53 auf, die in zusammengebautem Zustand in entsprechende Ausnehmungen 55 der Codescheibe 27 oder eines Lagerstücks 57 lösbar oder unlösbar einrasten.

Auf der Leiterplatte 33 ist eine Abtasteinrichtung 34 dargestellt, die im wesentlichen aus einem Sender 35 mit beispielsweise 5 Leuchtdioden und einem Empfänger 37 mit beispielsweise 5 Transistoren besteht. Zwischen Sender 35 und Empfänger 37 ist eine Abdeckung 59 angeordnet, die Streulicht von der Abtasteinrichtung 34 fernhält und den Sender 35 trägt.
Die Umdrehungserkennung 39 weist 4 Hall-Elemente 43 auf, von denen immer eines geschaltet ist. Auf der Leiterplatte 33 sind außerdem Steckerstifte 61 und 63 dargestellt. Die Steckerstifte 61 kontaktieren in montiertem Zustand ersten, zweiten und dritten Lenkstockschalter 6, 7, und 9, während die Steckerstifte 63 das Lenkstockmodul mit dem Kraftfahrzeug kontaktieren.

An dem Gehäuse 45 sind Steckergehäuse 65 und 67 angeordnet, die in zusammengebautem Zustand des Lenkwinkelsensors 3 die Steckerstifte 61 und 63 aufnehmen, so dass sich komplette Kontaktstecker ergeben. An dem Träger 25 ist ein Kontaktstecker 69 angeordnet, der in zusammengebautem Zustand des Lenkwinkelsensors 3 die Signalübertragungskassette 1 mit dem Lenkwinkelsensor 3 kontaktiert.

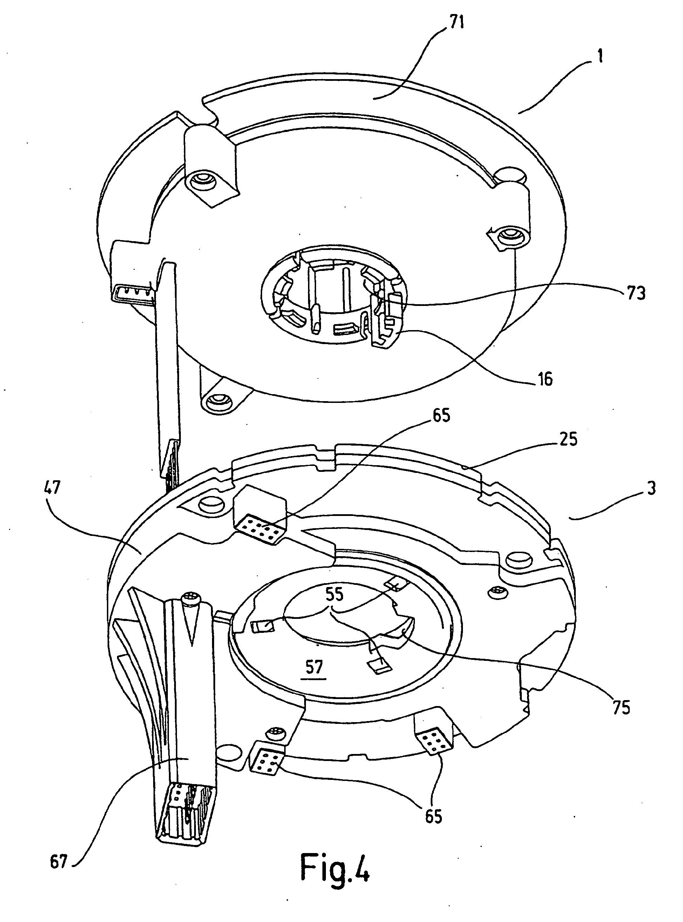

In Fig. 4 sind Signalübertragungskassette 1 und Lenkwinkelsensor 3 dargestellt. In dieser Darstellung ist das drehende Teil 71 der Signalübertragungskassette 1 zu erkennen. Es wird mit seiner Bohrung 73 über die in Fig. 4 nicht dargestellte Lenksäule geschoben und dreht sich mit der Lenksäule. Der Zapfen 16 des drehenden Teils 71 greift, wenn die Signalübertragungskassette 1 auf den Lenkwinkelsensor 3 geschoben wird, in eine Ausnehmung 75 des Lagerstücks 57 der Codescheibe 27. Dabei erfolgt die Übertragung der Lenkbewegung zwischen Signalübertragungskassette 1 und Lenkwinkelsensor 3 spielfrei. In radialer und axialer Richtung kann der Zapfen 16 sich relativ zu der Ausnehmung 73 der Codescheibe 27 bewegen.

In Fig. 4 ist auch zu erkennen, dass Steckerstifte 77 in zusammengebautem Zustand die elektrische Verbindung zwischen Signalübertragungskassette 1 einerseits und Lenkwinkelsensor 3 und Kraftfahrzeug andererseits herstellen.

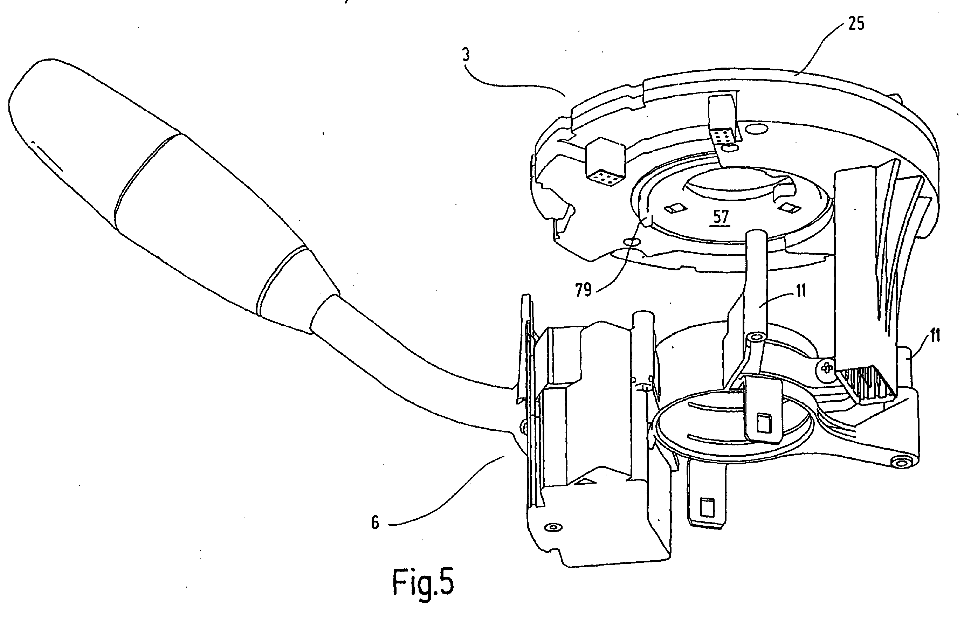

Fig. 5 zeigt den Lenkwinkelsensor 3 und den Lenkstockschalter 6, mit dem die Blinker betätigt werden. Die Lagerung der Codescheibe 27 in dem Träger 25 mittels Lagerring 49 und Lagerstück 57 ist in dieser Darstellung zu erkennen. Das Lagerstück weist einen Stift 79 auf, der in Richtung des ersten Lenkstockschalters 6 über die Codescheibe 27 und den Lenkwinkelsensor 3 hinausragt. In zusammengebautem Zustand betätigt der Stift 79 einen in dieser Darstellung nicht erkennbaren Rückstellnocken des ersten Lenkstockschalters 6 und stellt somit den ersten Lenkstockschalter zurück. Dadurch wird das Blinken des Kraftfahrzeugs beendet.

## Patentansprüche

1. Lenkstockmodul für Kraftfahrzeuge mit einem ersten Lenkstockschalter (6) zur Blinkerbetätigung, wobei der erste Lenkstockschalter (6) eine Blinkerrückstellung aufweist, und mit einem Lenkwinkelsensor (3), wobei die Blinkerrückstellung von dem Lenkwinkelsensor (3) steuerbar ist und der Lenkwinkelsensor (3) eine drehbare Codescheibe (27) aufweist, **dadurch gekennzeichnet, dass** die Codescheibe (27) einen in axialer Richtung über die Codescheibe (27) hinausragenden Vorsprung (79) aufweist, durch den ein Rückstellnocken des Lenkstockschalters (6) steuerbar ist.

2. Lenkstockmodul nach Anspruch 1, **dadurch gekennzeichnet, dass** der Vorsprung (79) ein exzentrisch angeordneter, sich in axialer Richtung erstreckender Stift (79) ist.

3. Lenkstockmodul nach einem der vorhergehenden Ansprüche, **dadurch gekennzeichnet, dass** die Codescheibe (27) radial gesichert und drehbar in einem Träger (25) des Lenkwinkelsensors (3) gelagert ist.

4. Lenkstockmodul nach einem der vorhergehenden Ansprüche, **dadurch gekennzeichnet, dass** die Codescheibe (27) radial gesichert und drehbar in einem Gehäuse (45) des Lenkwinkelsensors (3) gelagert ist.

5. Lenkstockmodul nach einem der vorhergehenden Ansprüche, **dadurch gekennzeichnet, dass** auf dem Träger (25) des Lenkwinkelsensors (3) eine Abtasteinrichtung (34) zum Abtasten der Codescheibe (27) angeordnet ist.

6. Lenkstockmodul nach einem der vorhergehenden Ansprüche, **dadurch gekennzeichnet, dass** die Drehwinkelcodierung auf einer Stirnfläche der Codescheibe (27) angeordnet ist.

7. Lenkstockmodul nach einem der vorhergehenden Ansprüche, **dadurch gekennzeichnet, dass** die Drehwinkelcodierung auf der Codescheibe (27) in Form von Löchern erfolgt.

8. Lenkstockmodul nach einem der vorhergehenden Ansprüche, **dadurch gekennzeichnet, dass** die Drehwinkelcodierung auf einer Mantelfläche der Codescheibe (27) angeordnet ist.

9. Lenkstockmodul nach einem der vorhergehenden Ansprüche, **dadurch gekennzeichnet, dass** an dem Lenkstockmodul eine Signalübertragungskassette (1) vorhanden ist.

10. Lenkstockmodul nach einem der vorhergehenden Ansprüche, **dadurch gekennzeichnet, dass** an dem Lenkstockmodul ein zweiter (7) und ein dritter (9) Lenkstockschalter vorhanden sind.

11. Lenkstockmodul nach einem der vorhergehenden Ansprüche, **dadurch gekennzeichnet, dass** die Signalübertragungskassette (1), der Lenkwinkelsensor (3) und/oder zweiter und dritter Lenkstockschalter (7, 9) mit einem ersten Lenkstockschalter (6) zu einem Lenkstockmodul verbindbar sind.

12. Lenkstockmodul nach einem der vorhergehenden Ansprüche, **dadurch gekennzeichnet, dass** eine erste Auswerteelektronik des Lenkwinkelsensors (3) und eine zweite Auswerteelektronik der Signalübertragungskassette (1) und/oder des oder der Lenkstockschalter (6, 7, 9) räumlich benachbart angeordnet sind.

13. nach einem der vorhergehenden Ansprüche, **dadurch gekennzeichnet, dass** eine Signalübertragungskassette (1) vorhanden:ist, dass die Signalübertragungskassette (1) einen mit einem Lenkrad des Kraftfahrzeugs drehbaren Teil (71) aufweist, und dass die Codescheibe (27) und der drehbare Teil (71) der Signalübertragungskassette (1) drehfest miteinander verbunden sind.

## Claims

1. A steering column module for motor vehicles, having a first steering column switch (6) for operating the turn indicator, wherein the first steering column switch (6) has a turn indicator resetting device, and having a steering angle sensor (3), wherein the turn indicator resetting device can be controlled by the steering angle sensor (3), and the steering angle sensor (3) has a rotatable code disk (27), **characterized in that** the code disk (27) has a protrusion (79), which extends in the axial direction past the code disk (27), by means of which a steering column cam of the steering column switch (6) can be controlled.

2. The steering column module in accordance with claim 1, **characterized in that** the protrusion (79) is an eccentrically arranged pin (79), which extends in the axial direction.

3. The steering column module in accordance with one of the preceding claims, **characterized in that** the code disk (27) is radially secured and rotatably seated in a support (25) of the steering angle sensor (3).

4. The steering column module in accordance with one of the preceding claims, **characterized in that** the code disk (27) is radially secured and rotatably seated in a housing (45) of the steering angle sensor (3).

5. The steering column module in accordance with one of the preceding claims, **characterized in that** a scanning device (34) for scanning the code disk (27) is arranged on the support (25) of the steering angle sensor (3).

6. The steering column module in accordance with one of the preceding claims, **characterized in that** the angle of rotation coding is arranged on a front face of the code disk (27).

7. The steering column module in accordance with one of the preceding claims, **characterized in that** the angle of rotation coding is provided in the form of holes in the code disk (27).

8. The steering column module in accordance with one of the preceding claims, **characterized in that** the angle of rotation coding is arranged on a shell surface of the code disk (27).

9. The steering column module in accordance with one of the preceding claims, **characterized in that** a signal transmission cassette (1) is provided on the steering column module.

10. The steering column module in accordance with one of the preceding claims, **characterized in that** a second (7) and a third (9) steering column switch are provided on the steering column module.

11. The steering column module in accordance with one of the preceding claims, **characterized in that** the signal transmission cassette (1), the steering angle sensor (3) and/or the second and third steering column switches (7, 9) can be connected with the first steering column switch (6) to form a steering column module.

12. The steering column module in accordance with one of the preceding claims, **characterized in that** a first electronic evaluation device of the steering angle sensor (3) and a second electronic evaluation device of the signal transmission cassette (1) and/or of the steering column switch(es) (6, 7, 8) are arranged spatially adjoining.

13. The steering column module in accordance with one of the preceding claims, **characterized in that** a signal transmission cassette (1) is provided, that the signal transmission cassette (1) has an element (71), which can be rotated together with the steering wheel of the motor vehicle, and that the code disk (2) and the rotatable portion (71) of the signal transmission cassette (1) are connected, fixed against relative rotation, with each other.

## Revendications

1. Module de colonne de direction pour véhicules automobiles avec un premier commutateur de colonne de direction (6) pour l'actionnement des clignotants, dans lequel le premier commutateur de colonne de direction (6) présente un dispositif de rappel de clignotant, et avec un capteur d'angle de direction (3), dans lequel le dispositif de rappel de clignotant peut être commandé par le capteur d'angle de direction (3) et le capteur d'angle de direction (3) présente un disque de code rotatif (27), **caractérisé en ce que** le disque de code (27) présente une saillie (79) dépassant du disque de code (27) dans la direction axiale et pouvant commander une came de rappel du commutateur de colonne de direction (6).

2. Module de colonne de direction selon la revendication 1, **caractérisé en ce que** la saillie (79) est une broche (79) disposée de façon décentrée et s'étendant dans la direction axiale.

3. Module de colonne de direction selon l'une quelconque des revendications précédentes, **caractérisé en ce que** le disque de code (27) est logé de façon radialement fixée et rotative dans un support (25) du capteur d'angle de direction (3).

4. Module de colonne de direction selon l'une quelconque des revendications précédentes, **caractérisé en ce que** le disque de code (27) est logé de façon radialement fixée et rotative dans un boîtier (45) du capteur d'angle de direction (3).

5. Module de colonne de direction selon l'une quelconque des revendications précédentes, **caractérisé en ce que** sur le support (25) du capteur d'angle de direction (3), un dispositif de palpage (34) est disposé pour palper le disque de code (27).

6. Module de colonne de direction selon l'une quelconque des revendications précédentes, **caractérisé en ce que** le codage d'angle de rotation est disposé sur une face frontale du disque de code (27).

7. Module de colonne de direction selon l'une quelconque des revendications précédentes, **caractérisé en ce que** le codage d'angle de rotation s'effectue sur le disque de code (27) sous forme de trous.

8. Module de colonne de direction selon l'une quelconque des revendications précédentes, **caractérisé en ce que** le codage d'angle de rotation est disposé sur une surface latérale du disque de code (27).

9. Module de colonne de direction selon l'une quelconque des revendications précédentes, **caractérisé en ce qu'**une cassette de transmission de signal (1) existe sur le module de colonne de direction.

10. Module de colonne de direction selon l'une quelconque des revendications précédentes, **caractérisé en ce que** sur le module de colonne de direction, il existe un deuxième (7) et un troisième (9) commutateur de colonne de direction.

11. Module de colonne de direction selon l'une quelconque des revendications précédentes, **caractérisé en ce que** la cassette de transmission de signal (1), le capteur d'angle de direction (3) et/ou le deuxième et troisième commutateur de colonne de direction (7, 9) peuvent être reliés par un premier commutateur de colonne de direction (6) en un module de colonne de direction.

12. Module de colonne de direction selon l'une quelconque des revendications précédentes, **caractérisé en ce qu'**un premier système électronique d'évaluation du capteur d'angle de direction (3) et un deuxième système électronique d'évaluation de la cassette de transmission de signal (1) et/ou du ou des commutateurs de colonne de direction (6, 7, 9) sont disposés de façon adjacente dans l'espace.

13. Module de colonne de direction selon l'une quelconque des revendications précédentes, **caractérisé en ce qu'**il existe une cassette de transmission de signal (1), **en ce que** la cassette de transmission de signal (1) présente une pièce (71) pouvant tourner avec un volant du véhicule automobile, et **en ce que** le disque de code (27) et la pièce rotative (71) de la cassette de transmission de signal (1) sont reliés ensemble en étant verrouillés en rotation.
